# EUROPEAN PATENT APPLICATION

(11) **EP 4 838 370 A1**
(43) Date of publication of application: **11.11.2026**
(21) Application number: 26177117.4
(22) Date of filing: 07.05.2026
(51) Int. Cl.: G06F 13/16, G06F 1/3234, G06F 12/08

(54) **MEMORY SYSTEM WHERE A MEMORY CONTROLLER IS PRE-INFORMED ABOUT THE SPECIFIC MEMORY RANK TO BE ACCESSED**

(30) Priority: 09.05.2025 US 202519203209
(71) Applicant: MediaTek Inc., Hsinchu City 30078 (TW)
(72) Inventor: CHANG, Chih-Chieh, 30078 Hsinchu City (TW); HUNG, Hsiu-Chieh, 30078 Hsinchu City (TW)
(74) Representative: Hoefer & Partner Patentanwälte mbB

(57) **Abstract**

A memory system (600) includes an external memory interface (610), a system-level cache (620) and a memory controller (630). The external memory interface (610) receives a first signal (S61) from a master device (105) and converts the first signal (S61) to a second signal (S62). The system-level cache (620) is coupled to the external memory interface (610) and stores data (625) to be accessed according to the second signal (S62) and sends a third signal (S63) according to the second signal (S62). The memory controller (630) is coupled to the system-level cache (620) and receives the third signal (S63) and a fourth signal (S64) and sends a control signal (Sc) according to the fourth signal (S64) to enable a first memory rank (rank0) or a second memory rank (rank1) to enter a standby mode and perform a clock synchronization operation before accessing memory data by the memory controller (630).

## Description

### Field of the Invention

The disclosure is related to a memory system, and more particularly, a memory system where a memory controller is pre-informed about the specific memory rank to be accessed.

### Background of the Invention

As applications of electronic devices become more complex, the memory requirements are also increasing. In order to store more data, it is insufficient to use memories with single memory rank. Therefore, in an electronic device, it is often necessary to use a memory with multiple memory ranks.

However, technical problems were found in practice. Since it is difficult to detect in advance which memory rank is to be accessed, using a memory with two memory ranks results in longer latency, and it is difficult to manage power consumption of the memory.

### Summary of the Invention

The present invention is set out in the appended set of claims.

### Brief Description of the Drawings

In the following, the invention is further illustrated by way of example, taking reference to the accompanying drawings. Thereof:
FIG. 1 illustrates a memory system coupled to a master device and a dynamic random-access memory according to an embodiment;
FIG. 2 illustrates a memory system coupled to the master device and the dynamic random-access memory according to another embodiment;
FIG. 3 illustrates a memory system coupled to the master device and the dynamic random-access memory according to another embodiment;
FIG. 4 illustrates a memory system coupled to the master device and the dynamic random-access memory according to another embodiment;
FIG. 5 illustrates a memory system coupled to the master device and the dynamic random-access memory according to another embodiment;
FIG. 6 illustrates a memory system coupled to the master device and the dynamic random-access memory according to another embodiment; and
FIG. 7 illustrates a memory system coupled to the master device and the dynamic random-access memory according to another embodiment.

### Detailed Description

A memory can be operated in a high efficiency (HE) mode and a low power (LP) mode. When the memory is operated in the high efficiency mode, the clock signal (e.g. WCK signal) can be always turned ON and the clock synchronization (e.g. WCK2CK sync operation) can be performed until the memory enters a power down (PD) mode. In the high efficiency mode, the two memory ranks in the memory can perform clock synchronization at the same time, and the two memory ranks in the memory can be set in a stand-by mode or a power down mode at the same time.

When the memory is in the low power mode, the clock signal (e.g. WCK signal) can be set OFF after a read operation and/or a write operation is performed, and the clock synchronization (e.g. WCK2CK sync operation) should be performed before a read operation and/or a write operation. The clock synchronization (e.g. WCK2CK sync operation) can be performed until the memory enters a power down (PD) mode. In the low power mode, the two memory ranks in the memory can perform clock synchronization separately, and the two memory ranks in the memory can be set in a stand-by mode or a power down mode separately.

In order to reduce the latency and the power consumption of operating a memory, the following memory systems are introduced.

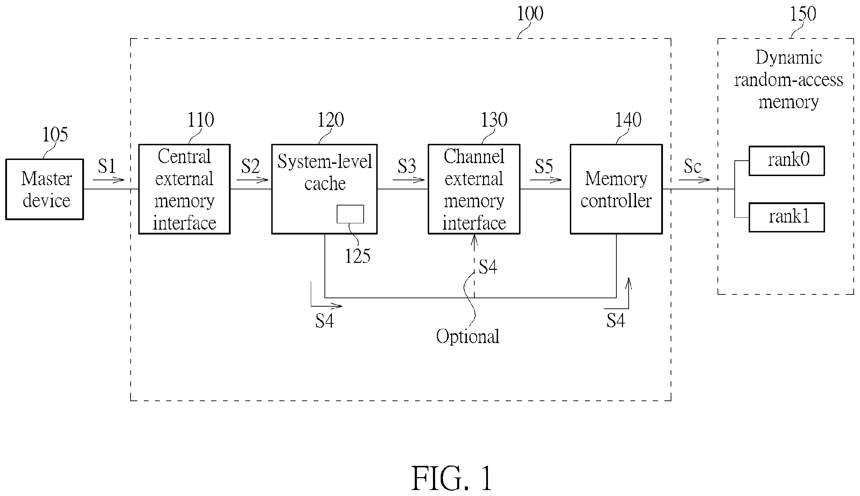

FIG. 1 illustrates a memory system 100 coupled to a master device 105 and a dynamic random-access memory 150 according to an embodiment. The memory system 100 includes a central external memory interface 110, a system-level cache 120, a channel external memory interface 130, and a memory controller 140.

The central external memory interface 110 is used to convert a first signal S1 from the master device 105 to a second signal S2. For example, the master device 105 can be a processor such as a central processing unit (CPU), a graphical processing unit (GPU), a tensor processing unit (TPU), etc. The central external memory interface 110 can include a first terminal and a second terminal, where the first terminal is coupled to the master device 105 to receive the first signal S1, and the second terminal is used to send the second signal S2.

The system-level cache 120 is used to store data 125 to be accessed according to the second signal S2. The system-level cache 120 includes a first terminal, a second terminal and a third terminal, where the first terminal is coupled to the central external memory interface 110 and used to receive the second signal, the second terminal is used to send a third signal S3 corresponding to the second signal S2, and the third terminal is used to send a fourth signal S4 corresponding to the second signal S2.

The channel external memory interface 130 is used to generate a fifth signal S5 according to at least the third signal S3. The channel external memory interface 130 includes a first terminal and a second terminal, where the first terminal is coupled to the system-level cache 120 and used to receive the third signal S3, and the second terminal is used to send the fifth signal S5.

The memory controller 140 is used to send a control signal Sc to enable one of a first memory rank rank0 and a second memory rank rank1 to enter a standby mode and perform a clock synchronization operation (e.g. WCK2CK Sync operation) before accessing memory data of a dynamic random-access memory 150 by the memory controller 140. As shown in FIG. 1, the first memory rank rank0 and the second memory rank rank1 can be embedded in the dynamic random-access memory 150.

The memory controller 140 includes a first terminal, a second terminal and a third terminal. The first terminal of the memory controller 140 is coupled to the channel external memory interface 130 and used to receive the fifth signal S5. The second terminal of the memory controller 140 is coupled to the system-level cache 120 and used to receive the fourth signal S4. The third terminal of the memory controller 140 is coupled to the first memory rank rank0 and the second memory rank rank1 and used to send the control signal Sc according to the fourth signal S4.

The fourth signal S4 is used to inform the memory controller 140 which one of the first memory rank rank0 and the second memory rank rank1 is to be accessed before the memory controller 140 receives the fifth signal S5. The fifth signal S5 contains an address of data in the first memory rank rank0 or the second memory rank rank1 to be accessed by the memory controller 140.

In FIG. 1, the system-level cache 120 can send the third signal S3 and the fourth signal S4 when the data 125 stored in the system-level cache 120 fails to include required data described in the second signal S2. In other words, the system-level cache 120 can send the third signal S3 and the fourth signal S4 when a "cache miss" event occurs.

As shown in FIG. 1, the channel external memory interface 130 can optionally further include a third terminal coupled to the system-level cache 120 and be used to receive the fourth signal S4. In this structure, the fourth signal S4 can be further used to inform the channel external memory interface 130 which one of the first memory rank rank0 and the second memory rank rank1 is to be accessed, and the fifth signal S5 can be generated according to the third signal S3 and the fourth signal S4.

By using the fourth signal S4 to pre-inform the channel external memory interface 130 and/or the memory controller 140 which one of the first memory rank rank0 and the second memory rank rank1 is to be accessed, the memory rank to be accessed is enabled in advance. As a result, the time for waiting the memory rank to be enabled is reduced, and the latency of the operation is reduced. Consequently the power consumption of the first memory rank rank0 and the second memory rank rank1 is managed more efficiently and flexibly.

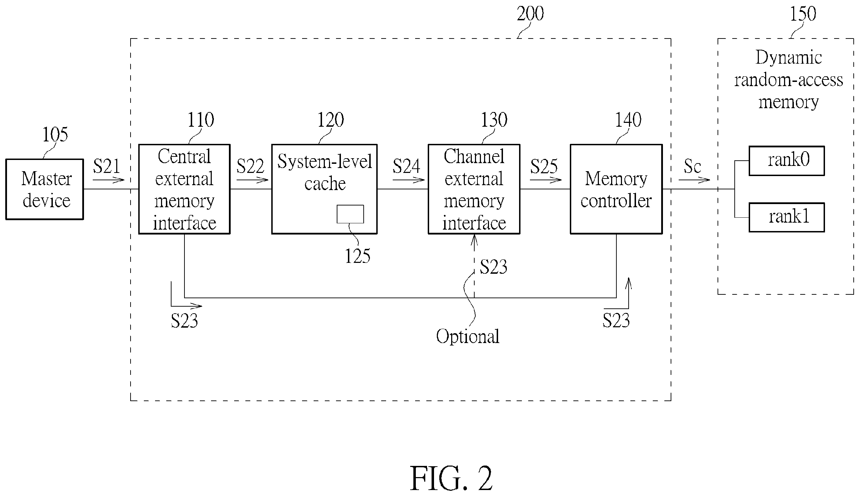

FIG. 2 illustrates a memory system 200 coupled to the master device 105 and the dynamic random-access memory 150 according to another embodiment. The memory system 200 includes a central external memory interface 110, a system-level cache 120, a channel external memory interface 130, and a memory controller 140.

The central external memory interface 110 is used to convert a first signal S21 from the master device 105 to a second signal S22 and a third signal S23. The central external memory interface 110 includes a first terminal, a second terminal and a third terminal. The first terminal of the central external memory interface 110 is used to receive the first signal S21. The second terminal of central external memory interface 110 is used to send the second signal S22. The third terminal of the central external memory interface 110 is used to send the third signal S23.

The system-level cache 120 is used to store data 125 to be accessed according to the second signal S22. The system-level cache 120 includes a first terminal and a second terminal. The first terminal of the system-level cache 120 is coupled to the central external memory interface 110 and used to receive the second signal S22. The second terminal of the system-level cache 120 is used to send a fourth signal S24 corresponding to the second signal S22.

The channel external memory interface 130 is used to generate a fifth signal S25 according to at least the fourth signal S24. The channel external memory interface 130 includes a first terminal and a second terminal. The first terminal of the channel external memory interface 130 is coupled to the system-level cache 120 and used to receive the fourth signal S24. The second terminal of the channel external memory interface 130 is used to send the fifth signal S25.

The memory controller 140 is used to send a control signal Sc to enable one of the first memory rank rank0 and the second memory rank rank1 to enter a standby mode and perform a clock synchronization operation (e.g. WCK2CK Sync operation) before accessing memory data of the dynamic random-access memory 150 by the memory controller 140. As shown in FIG. 2, the first memory rank rank0 and the second memory rank rank1 can be embedded in the dynamic random-access memory 150. The memory controller 140 includes a first terminal, a second terminal and a third terminal. The first terminal of the memory controller 140 is coupled to the channel external memory interface 130 and used to receive the fifth signal S25. The second terminal of the memory controller 140 is coupled to the central external memory interface 110 and used to receive the third signal S23. The third terminal of the memory controller 140 is coupled to the first memory rank rank0 and the second memory rank rank1 and used to send the control signal Sc according to the third signal S23.

The third signal S23 is used to inform the memory controller 140 which one of the first memory rank rank0 and the second memory rank rank1 is to be accessed before the memory controller 140 receives the fifth signal S25. The fifth signal S25 contains an address of data in the first memory rank rank0 or the second memory rank rank1 to be accessed by the memory controller 140.

In FIG. 2, the system-level cache 120 can send the fourth signal S24 when the data 125 stored in the system-level cache 120 fails to include required data described in the second signal S22. In other words, the system-level cache 120 can send the fourth signal S24 when a "cache miss" event occurs.

The channel external memory interface 130 can optionally further include a third terminal. The third terminal of the channel external memory interface 130 can be coupled to the central external memory interface 110 and used to receive the third signal S23. In this structure, the third signal S23 can be further used to inform the channel external memory interface 130 which one of the first memory rank rank0 and the second memory rank rank1 is to be accessed. The fifth signal S25 can be generated according to the fourth signal S24 and the third signal S23.

By informing the channel external memory interface 130 and/or the memory controller 140 which one of the first memory rank rank0 and the second memory rank rank1 is to be accessed before the memory controller 140 receives the fifth signal S25, the memory rank to be accessed is enabled in advance. As a result, the time for waiting the memory rank to be enabled is reduced, and the latency of the operation is reduced. Consequently the power consumption of the first memory rank rank0 and the second memory rank rank1 is managed more efficiently and flexibly.

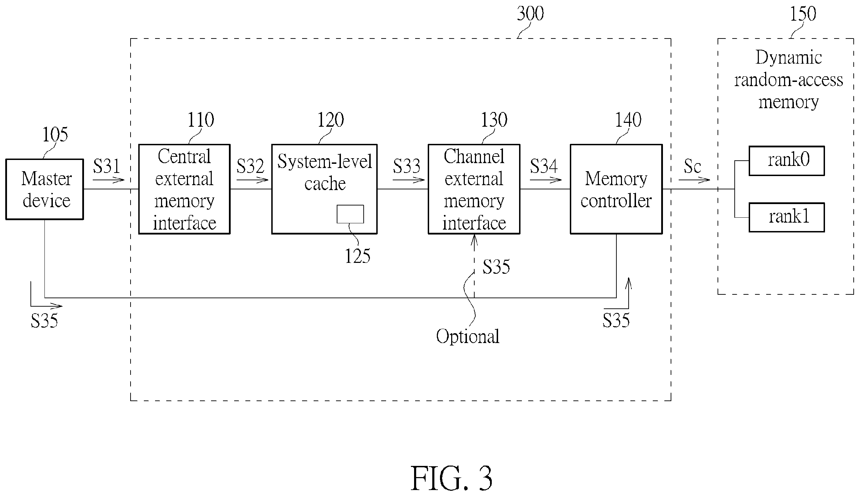

FIG. 3 illustrates a memory system 300 coupled to the master device 105 and the dynamic random-access memory 150 according to another embodiment. The memory system 300 includes a central external memory interface 110, a system-level cache 120, a channel external memory interface 130, and a memory controller 140. In FIG. 3, the central external memory interface 110 is used to convert a first signal S31 from the master device 105 to a second signal S32. The central external memory interface 110 includes a first terminal and a second terminal, where the first terminal is used to receive the first signal S31, and the second terminal is used to send the second signal S32.

The system-level cache 120 is used to store data 125 to be accessed according to the second signal S32. The system-level cache 120 includes a first terminal and a second terminal. The first terminal of the system-level cache 120 is coupled to the central external memory interface 110 and used to receive the second signal S32. The second terminal of the system-level cache 120 is used to send a third signal S33 corresponding to the second signal S32.

The channel external memory interface 130 is used to generate a fourth signal S34 according to at least the third signal S33. The channel external memory interface 130 includes a first terminal and a second terminal, where the first terminal is coupled to the system-level cache 120 to receive the third signal S33, and the second terminal is used to send the fourth signal S34.

The memory controller 140 is used to send a control signal Sc to enable one of the first memory rank rank0 and the second memory rank rank1 to enter a standby mode and perform a clock synchronization operation (e.g. WCK2CK Sync operation) before accessing memory data of the dynamic random-access memory 150 by the memory controller 140. The first memory rank rank0 and the second memory rank rank1 can be embedded in the dynamic random-access memory 150.

The memory controller 140 includes a first terminal, a second terminal and a third terminal. The first terminal of the memory controller 140 is coupled to the channel external memory interface 130 and used to receive the fourth signal S34. The second terminal of the memory controller 140 is coupled to the master device 105 and used to receive a fifth signal S35. The third terminal of the memory controller 140 is coupled to the first memory rank rank0 and the second memory rank rank1 and used to send the control signal Sc according to the fifth signal S35.

In FIG. 3, the fifth signal S35 is used to inform the memory controller 140 which one of the first memory rank rank0 and the second memory rank rank1 is to be accessed before the memory controller 140 receives the fourth signal S34. The fourth signal S34 contains an address of data in the first memory rank rank0 or the second memory rank rank1 to be accessed by the memory controller 140.

In FIG. 3, the system-level cache 120 can send the third signal S33 when the data 125 stored in the system-level cache 120 fails to include required data described in the second signal S32. In other words, the system-level cache 120 can send the third signal S33 when a "cache miss" event occurs.

The channel external memory interface 130 can optionally further include a third terminal coupled to the master device 105 and used to receive the fifth signal S35. In this structure, the fifth signal S35 can be further used to inform the channel external memory interface 130 which one of the first memory rank rank0 and the second memory rank rank1 is to be accessed, and the fourth signal S34 can be generated according to the third signal S33 and the fifth signal S35.

By informing the channel external memory interface 130 and/or the memory controller 140 which one of the first memory rank rank0 and the second memory rank rank1 is to be accessed before the memory controller 140 receives the fourth signal S34, the memory rank to be accessed is enabled in advance. As a result, the operation latency is reduced, and the power consumption is better managed.

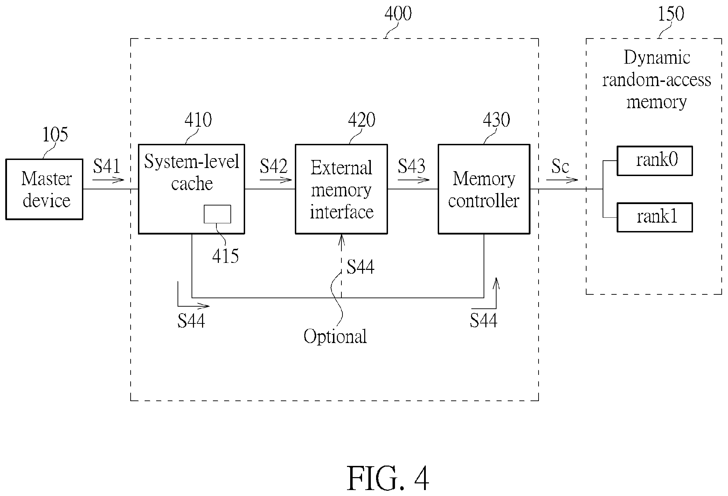

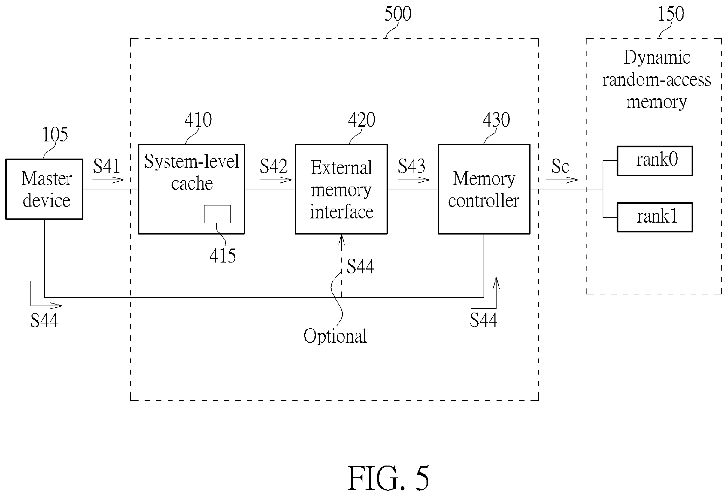

FIG. 4 illustrates a memory system 400 coupled to the master device 105 and the dynamic random-access memory 150 according to another embodiment. FIG. 5 illustrates a memory system 500 coupled to the master device 105 and the dynamic random-access memory 150 according to another embodiment. Each of the memory system 400 and the memory system 500 includes a system-level cache 410, an external memory interface 420 and memory controller 430.

The system-level cache 410 is used to store data 415 to be accessed according to a first signal S41 from the master device 105 and generate a second signal S42 according to the first signal S41. The external memory interface 420 is coupled to the system-level cache 410 and used to receive the second signal S42 and generate a third signal S43 according to at least the second signal S42.

The memory controller 430 is coupled to the external memory interface 420. The memory controller 430 is used to receive the third signal S43 and a fourth signal S44 and generate a control signal Sc according to the fourth signal S44. The control signal Sc is used to enable one of the first memory rank rank0 and the second memory rank rank1 of the dynamic random-access memory 150 to enter a standby mode and perform a clock synchronization operation (e.g. WCK2CK Sync operation) before accessing memory data by the memory controller 430.

The system-level cache 410 sends the second signal S42 when the data 415 stored in the system-level cache 410 fails to include required data described in the first signal S41. In other words, system-level cache 410 sends the second signal S42 when a "cache miss" event occurs.

The fourth signal S44 is used to inform the memory controller 430 which one of the first memory rank rank0 and the second memory rank rank1 is to be accessed before the memory controller 430 receives the third signal S43. The third signal S43 contains an address of data in the first memory rank rank0 or the second memory rank rank1 to be accessed by the memory controller 430.

The fourth signal S44 can be generated by one of the system-level cache 410 and the master device 105. In FIG. 4, the fourth signal S44 can be generated by the system-level cache 410. In FIG. 5, the fourth signal S44 can be generated by the master device 105.

In FIG. 4 and FIG. 5, the fourth signal S44 can be optionally further sent to the external memory interface 420, and the external memory interface 420 can generate the third signal S43 according to the second signal S42 and the fourth signal S44.

By informing the external memory interface 420 and/or the memory controller 430 which one of the first memory rank rank0 and the second memory rank rank1 is to be accessed before the memory controller 430 receives the third signal S43, the memory rank to be accessed is enabled in advance. As a result, the operation latency is reduced, and the power consumption is better managed.

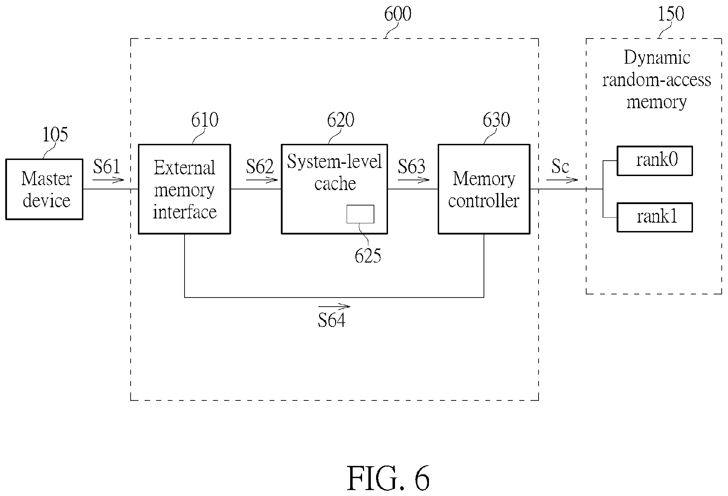

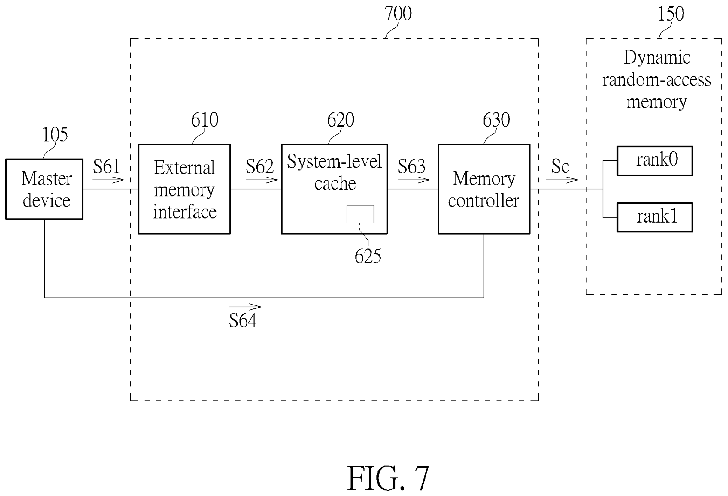

FIG. 6 illustrates a memory system 600 coupled to the master device 105 and the dynamic random-access memory 150 according to another embodiment. FIG. 7 illustrates a memory system 700 coupled to the master device 105 and the dynamic random-access memory 150 according to another embodiment.

Each of the memory system 600 and memory system 700 includes an external memory interface 610, a system-level cache 620, and a memory controller 630. The external memory interface 610 is used to receive a first signal S61 from the master device 105 and convert the first signal S61 to a second signal S62. The system-level cache 620 is coupled to the external memory interface 610 and used to store data 625 to be accessed according to the second signal S62 and send a third signal S63 according to the second signal S62.

The memory controller 630 is coupled to the system-level cache 620 and used to receive the third signal S63 and a fourth signal S64 and send a control signal Sc according to the fourth signal S64 to enable one of the first memory rank rank0 and the second memory rank rank1 to enter a standby mode and perform a clock synchronization operation (e.g. WCK2CK Sync operation) before accessing memory data of the dynamic random-access memory 150 by the memory controller 630.

The system-level cache 620 sends the third signal S63 when the data 625 stored in the system-level cache 620 fails to include required data described in the second signal S62. In other words, the system-level cache 620 sends the third signal S63 when a "cache miss" event occurs.

The fourth signal S64 is used to inform the memory controller 630 which one of the first memory rank rank0 and the second memory rank rank1 is to be accessed before the memory controller 630 receives the third signal S63. The third signal S63 contains an address of data in the first memory rank rank0 or the second memory rank rank1 to be accessed by the memory controller 630.

In FIG. 6, the fourth signal S64 can be generated by the external memory interface 610 according to the first signal S61. In FIG. 7, the fourth signal S64 can be generated by the master device 105.

In summary, as shown in FIG. 1 to FIG. 7, by informing the external memory interface and/or the memory controller which one of the first memory rank rank0 and the second memory rank rank1 is to be accessed before the memory controller receives the signal containing an address of data in the first memory rank rank0 or the second memory rank rank1 to be accessed, the memory rank to be accessed is enabled in advance. Hence, the operation latency is reduced, and power consumption is better managed.

## Claims

1. A memory system (100), **characterised by** comprising:
a central external memory interface (110) configured to convert a first signal (S1) from a master device (105) to a second signal (S2), the central external memory interface (110) comprising a first terminal coupled to the master device (105) and configured to receive the first signal (S1), and a second terminal configured to send the second signal (S2);
a system-level cache (120) configured to store data (125) to be accessed according to the second signal (S2), the system-level cache (120) comprising a first terminal coupled to the central external memory interface (110) and configured to receive the second signal (S2), a second terminal configured to send a third signal (S3) corresponding to the second signal (S2), and a third terminal configured to send a fourth signal (S4) corresponding to the second signal (S2);
a channel external memory interface (130) configured to generate a fifth signal (S5) according to at least the third signal (S3), the channel external memory interface (130) comprising a first terminal coupled to the system-level cache (120) and configured to receive the third signal (S3), and a second terminal configured to send the fifth signal (S5); and
a memory controller (140) configured to send a control signal (Sc) to enable one of a first memory rank (rank0) and a second memory rank (rank1) to enter a standby mode and perform a clock synchronization operation before accessing memory data by the memory controller (140), the memory controller (140) comprising a first terminal coupled to the channel external memory interface (130) and configured to receive the fifth signal (S5), a second terminal coupled to the system-level cache (120) and configured to receive the fourth signal (S4), and a third terminal coupled to the first memory rank (rank0) and the second memory rank (rank1) and configured to send the control signal (Sc) according to the fourth signal (S4);
wherein the fourth signal (S4) is used to inform the memory controller (140) which one of the first memory rank (rank0) and the second memory rank (rank1) is to be accessed before the memory controller (140) receives the fifth signal (S5), and the fifth signal (S5) contains an address of data in the first memory rank (rank0) or the second memory rank (rank1) to be accessed by the memory controller (140).

2. The memory system (100) according to claim 1, **characterised in that** the system-level cache (120) sends the third signal (S3) and the fourth signal (S4) when the data (125) stored in the system-level cache (120) fails to include required data described in the second signal (S2).

3. The memory system (100) according to claim 1, **characterised in that**:
the channel external memory interface (130) further comprises a third terminal coupled to the system-level cache (120) and configured to receive the fourth signal (S4);
the fourth signal (S4) is further used to inform the channel external memory interface (130) which one of the first memory rank (rank0) and the second memory rank (rank1) is to be accessed; and
the fifth signal (S5) is generated according to the third signal (S3) and the fourth signal (S4).

4. A memory system (200), **characterised by** comprising:
a central external memory interface (110) configured to convert a first signal (S21) from a master device (105) to a second signal (S22) and a third signal (S23), the central external memory interface (110) comprising a first terminal configured to receive the first signal (S21), a second terminal configured to send the second signal (S22), and a third terminal configured to send the third signal (S23);
a system-level cache (120) configured to store data (125) to be accessed according to the second signal (S22), the system-level cache (120) comprising a first terminal coupled to the central external memory interface (110) and configured to receive the second signal (S22), and a second terminal configured to send a fourth signal (S24) corresponding to the second signal (S22);
a channel external memory interface (130) configured to generate a fifth signal (S25) according to at least the fourth signal (S24), the channel external memory interface (130) comprising a first terminal coupled to the system-level cache (120) and configured to receive the fourth signal (S24), and a second terminal configured to send the fifth signal (S25); and
a memory controller (140) configured to send a control signal (Sc) to enable one of a first memory rank (rank0) and a second memory rank (rank1) to enter a standby mode and perform a clock synchronization operation before accessing memory data by the memory controller (140), the memory controller (140) comprising a first terminal coupled to the channel external memory interface (130) and configured to receive the fifth signal (S25), a second terminal coupled to the central external memory interface (110) and configured to receive the third signal (S23), and a third terminal coupled to the first memory rank (rank0) and the second memory rank (rank1) and configured to send the control signal (Sc) according to the third signal (S23);
wherein the third signal (S23) is used to inform the memory controller (140) which one of the first memory rank (rank0) and the second memory rank (rank1) is to be accessed before the memory controller (140) receives the fifth signal (S25), and the fifth signal (S25) contains an address of data in the first memory rank (rank0) or the second memory rank (rank1) to be accessed by the memory controller (140).

5. The memory system (200) according to claim 4, **characterised in that** the system-level cache (120) sends the fourth signal (S24) when the data (125) stored in the system-level cache (120) fails to include required data described in the second signal (S22).

6. The memory system (200) according to claim 4, **characterised in that**:
the channel external memory interface (130) further comprises a third terminal coupled to the central external memory interface (110) and configured to receive the third signal (S23);
the third signal (S23) is further used to inform the channel external memory interface (130) which one of the first memory rank (rank0) and the second memory rank (rank1) is to be accessed; and
the fifth signal (S25) is generated according to the fourth signal (S24) and the third signal (S23).

7. A memory system (300), **characterised by** comprising:
a central external memory interface (110) configured to convert a first signal (S31) from a master device (105) to a second signal (S32), the central external memory interface (110) comprising a first terminal configured to receive the first signal (S31), and a second terminal configured to send the second signal (S32);
a system-level cache (120) configured to store data (125) to be accessed according to the second signal (S32), the system-level cache (120) comprising a first terminal coupled to the central external memory interface (110) and configured to receive the second signal (S32), and a second terminal configured to send a third signal (S33) corresponding to the second signal (S32);
a channel external memory interface (130) configured to generate a fourth signal (S34) according to at least the third signal (S33), the channel external memory interface (130) comprising a first terminal coupled to the system-level cache (120) and configured to receive the third signal (S33), and a second terminal configured to send the fourth signal (S34); and
a memory controller (140) configured to send a control signal (Sc) to enable one of a first memory rank (rank0) and a second memory rank (rank1) to enter a standby mode and perform a clock synchronization operation before accessing memory data by the memory controller (140), the memory controller (140) comprising a first terminal coupled to the channel external memory interface (130) and configured to receive the fourth signal (S34), a second terminal coupled to the master device (105) and configured to receive a fifth signal (S35), and a third terminal coupled to the first memory rank (rank0) and the second memory rank (rank1) and configured to send the control signal (Sc) according to the fifth signal (S35);
wherein the fifth signal (S35) is used to inform the memory controller (140) which one of the first memory rank (rank0) and the second memory rank (rank1) is to be accessed before the memory controller (140) receives the fourth signal (S34), and the fourth signal (S34) contains an address of data in the first memory rank (rank0) or the second memory rank (rank1) to be accessed by the memory controller (140).

8. The memory system (300) according to claim 7, **characterised in that**:
the channel external memory interface (130) further comprises a third terminal coupled to the master device (105) and configured to receive the fifth signal (S35);
the fifth signal (S35) is further used to inform the channel external memory interface (130) which one of the first memory rank (rank0) and the second memory rank (rank1) is to be accessed; and
the fourth signal (S34) is generated according to the third signal (S33) and the fifth signal (S35).

9. The memory system (100, 200, 300) according to claim 1, 4 or 7, **characterised in that** the first memory rank (rank0) and the second memory rank (rank1) are embedded in a dynamic random-access memory (150).

10. A memory system (400, 500), **characterised by** comprising:
a system-level cache (410) configured to store data (415) to be accessed according to a first signal (S41) from a master device (105) and send a second signal (S42) according to the first signal (S41);
an external memory interface (420) coupled to the system-level cache (410) and configured to receive the second signal (S42) and send a third signal (S43); and
a memory controller (430) coupled to the external memory interface (420) and configured to receive the third signal (S43) and a fourth signal (S44) and send a control signal (Sc) according to the fourth signal (S44) to enable one of a first memory rank (rank0) and a second memory rank (rank1) to enter a standby mode and perform a clock synchronization operation before accessing memory data by the memory controller (430);
wherein:
the system-level cache (410) sends the second signal (S42) when the data (415) stored in the system-level cache (410) fails to include required data described in the first signal (S41); and
the fourth signal (S44) is used to inform the memory controller (430) which one of the first memory rank (rank0) and the second memory rank (rank1) is to be accessed before the memory controller (430) receives the third signal (S43), and the third signal (S43) contains an address of data in the first memory rank (rank0) or the second memory rank (rank1) to be accessed by the memory controller (430).

11. The memory system (400, 500) according to claim 10, **characterised in that** the fourth signal (S44) is generated by one of the system-level cache (410) and the master device (105).

12. The memory system (400, 500) according to claim 11, **characterised in that** the fourth signal (S44) is further sent to the external memory interface (420), and the external memory interface (420) generates the third signal (S43) according to the second signal (S42) and the fourth signal (S44).

13. A memory system (600, 700), **characterised by** comprising:
an external memory interface (610) configured to receive a first signal (S61) from a master device (105) and convert the first signal (S61) to a second signal (S62);
a system-level cache (620) coupled to the external memory interface (610) and configured to store data (625) to be accessed according to the second signal (S62) and send a third signal (S63) according to the second signal (S62); and
a memory controller (630) coupled to the system-level cache (620) and configured to receive the third signal (S63) and a fourth signal (S64) and send a control signal (Sc) according to the fourth signal (S64) to enable one of a first memory rank (rank0) and a second memory rank (rank1) to enter a standby mode and perform a clock synchronization operation before accessing memory data by the memory controller (630);
wherein:
the system-level cache (620) sends the third signal (S63) when the data (625) stored in the system-level cache (620) fails to include required data described in the second signal (S62); and
the fourth signal (S64) is used to inform the memory controller (630) which one of the first memory rank (rank0) and the second memory rank (rank1) is to be accessed before the memory controller (630) receives the third signal (S63), and the third signal (S63) contains an address of data in the first memory rank (rank0) or the second memory rank (rank1) to be accessed by the memory controller (630).

14. The memory system (600) according to claim 13, **characterised in that** the fourth signal (S64) is generated by the external memory interface (610) according to the first signal (S61).

15. The memory system (700) according to claim 13, **characterised in that** the fourth signal (S64) is generated by the master device (105).
